# EUROPEAN PATENT SPECIFICATION

(11) **EP 0 455 003 B1**
(45) Date of publication and mention of the grant of the patent: **30.11.1994**
(21) Application number: 91105442.7
(22) Date of filing: 05.04.1991
(51) Int. Cl.: B60K 26/00, B60K 37/00, F02D 41/26

(54) **Vehicle control system**
Fahrzeugsteuersystem
Système de commande d'un véhicule

(30) Priority: 06.04.1990 IT 6725790
(43) Date of publication of application: 06.11.1991
(73) Proprietor: WEBER S.r.l., I-10125 Torino (IT)
(72) Inventor: Ausiello, Francesco Paolo, I-40100 Bologna (IT)
(74) Representative: Jorio, Paolo

(56) References cited:
- WO-A-84/03911
- DE-A- 3 504 181
- ELECTRONICS & WIRELESS WORLD, vol. 93, no. 1622, December 1987, SUTTON GB, pages 1225-1228; P.D. Jordan: "Advanced engine management systems"
- IEEE SPECTRUM. vol. 23, no. 6, June 1986, NEW YORK US pages 53 - 59; R.K.
- Jurgen: "Coming from Detroit : networks on wheels"
- POPULAR SCIENCE. vol. 230, no. 6, June 1987, NEW YORK US pages 71 - 74; D.McCosh: "Smart circuits revolutionize auto wiring"

## Description

The present invention relates to an electronic control system for controlling motor vehicle members and equipment.

Modern cars are known to feature a number of electronic and electromechanical systems, each controlling a respective part of the vehicle. On some cars, some of these systems, such as the ignition and electronic injection systems, are integrated as described in the article of Patrick D. Jordan published in Electronics and Wireless World and entitled "Advanced engine management systems", while, on others, they are connected over data transmission lines, as described in the Patent DE-A-3504181 and in the article of Dan McCosh published in Popular Science and entitled "Smart circuits revolutionize auto wiring".

A vehicle control system consisting of a number of systems presents numerous drawbacks.

Foremost of these in the fact each electronic system features its own electronic control unit and sensors for detecting physical parameters and the operating status of given vehicle components, with the result that, invariably, the same parameter or component operating status is detected by more than one sensor, i.e. one for each control unit. A similar arrangement also involves the use of a large number of detecting members and electrical connections, and fails to make full use of certain parts of the electronic systems (e.g. the computing capacity of the control unit microprocessors) thus resulting in higher manufacturing and installation cost. Moreover, some or part of the systems currently employed and part of the electrical connecting circuits are housed in the engine compartment, which invariably results in impaired mechanical efficiency of certain parts of the system, due to wear caused by the high temperature and vibration inside the engine compartment, and impaired electronic performance due to the presence of strong, high- and low-voltage pulsating current and electromagnetic fields. Additional cost is therefore incurred for screening and insulating the members and electrical circuits housed inside the engine compartment. A further point to note is that all or most of the instrumentation on the vehicle is electromechanical, which rules out not only the possibility of exploiting the other system sensors, but also the possibility of integrating the instrumentation with the other electronic systems. Lastly, but by no means less importantly, is the number and location of the diagnostic taps. Each electronic system is known to feature a diagnostic tap for controlling or calibrating the electronic equipment on the vehicle at the end of the production line or during routine maintenance of the vehicle. At present, the diagnostic taps are housed in poorly accessible locations inside the engine compartment.

It is an object of the present invention to provide a vehicle control system designed to overcome the aforementioned drawbacks.

According to the present invention, there is provided a vehicle control system incorporating all the electronic equipment on the vehicle, comprising:
a main electronic logic unit connected to the vehicle battery via a first electronic electrical supply block; a second electronic block indicating operating data and
parameters, i.e. the operating status of the engine and vehicle;
a third electronic interface block to which are connected a number of sensors for detecting data, parameters, operation and operating status relative to various vehicle members and components;
a fourth electronic interface block to which are connected a number of electromechanical controls representative of both user-operated controls and controls enabled by said unit and governing said vehicle members and components;
a fifth electronic block for controlling electronic injectors; and
a sixth electronic block for controlling an electronic ignition power module; said blocks being connected electrically by electric connection lines to said unit,
characterized in that said unit and said blocks are installed on the vehicle dashpanel
A preferred non-limiting embodiment of the present invention will be described by way of example with reference to the accompanying drawings, in which:
Fig.1 shows a view in perspective of a vehicle control system as installed inside the passenger compartment of the vehicle;
Fig.2 shows an electronic block diagram of the Fig.1 system.

Number 1 in the accompanying drawings indicates an electronic vehicle control system installed inside the passenger compartment, in particular on the dashpanel, of the vehicle.

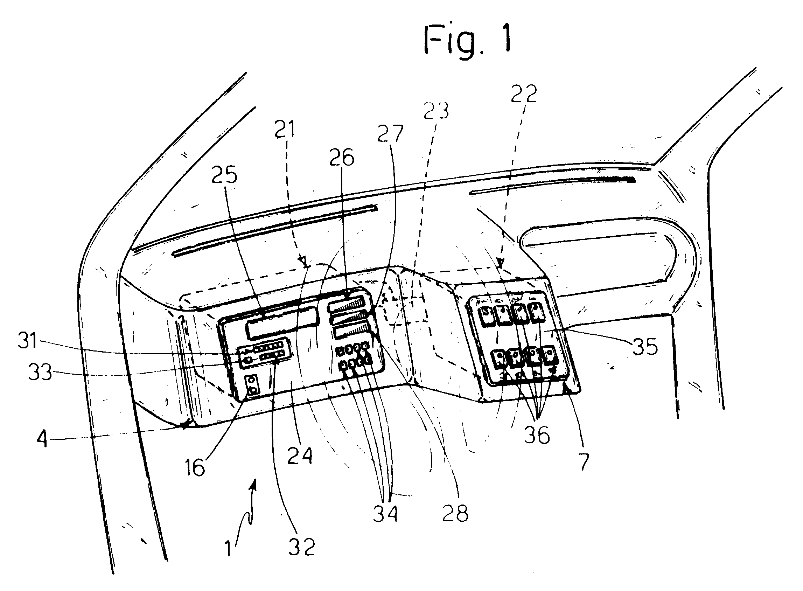

System 1 comprises:
a main logic unit 2 connected to the vehicle battery via an electrical supply block 3;
a block 4 indicating operating data and parameters (the operating status of the engine and vehicle) and substantially representing the instrumentation on the vehicle;
an interface block 5 to which are connected a number of sensors 6 designed, as described later, to detect data, parameters, operation and operating status relative to various vehicle members and components;
an interface block 7 to which are connected a number of electromechanical controls 8;
a block 11 for controlling electronic injectors 12;
a block 13 for controlling a power module 14 of the electronic ignition system; and
a block 15 for transmitting and receiving from unit 2 diagnostic data relative to the electronics of system 1, and consisting of a diagnostic tap 16 as shown in Fig.1.

System 1 may feature additional optional blocks 17 for the purposes described later on.

System 1 as described above therefore incorporates all the electronic equipment on the vehicle, which is controlled by one main unit requiring one sensor 6 for detecting each data item, parameter or vehicle component operating status. Sensors 6 are all electronic transducer types, which provide for numerous advantages (low cost, troublefree installation, low wear and substantially no maintenance) as compared with currently used mechanical transducers or detecting members in general.

Think, for example, of the advantage afforded by replacing current speed-per-hour detecting systems with an electronic pickup device. Moreover, certain parameters may be detected by simply processing those detected by certain sensors, thus reducing the actual number of sensors required.

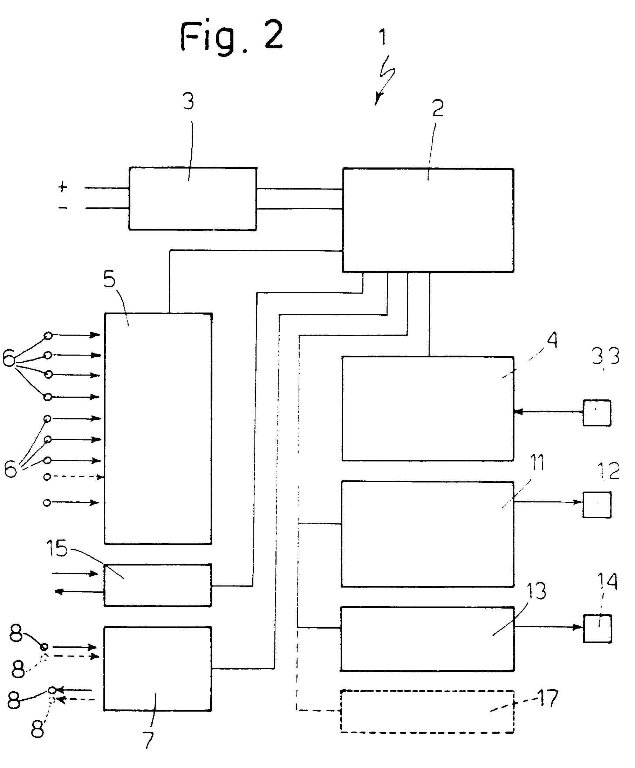

As already stated and shown in Fig.1, system 1 is installed on the dashpanel of the vehicle. In the embodiment shown, system 1 consists of two housings 21 and 22 containing main unit 2 and blocks 3, 4, 5, 7, 11 and 13 connected to the same, and connected electrically by a line 23 (shown by the dotted line). Housing 21 presents a front panel 24 supporting block 4 and diagnostic tap 16. Block 4 comprises a number of indicators showing parameters and data relative to operation and the operating status of the vehicle engine and components. In particular, indicator 25 shows the speed per hour of the vehicle; indicator 26 the fuel level; indicator 27 the temperature of the engine cooling fluid; indicator 28 the pressure of the multistage centrifugal blower (if installed); indicator 31 the total mileage of the vehicle; and indicator 32 the partial mileage count. To the side of indicator 32, a button 33 is provided for resetting the partial mileage indicator, and which may be connected directly to block 4, as shown in Fig.2, or represented by one of electromechanical controls 8.

Block 4 also comprises a number of indicator lights 34 for indicating the operating status of certain parts of the vehicle, such as the headlights or direction indicators. The indicators may of course provide for numerical and/or figurative display, wherein the parameter is shown, for example, in proportion to the overall extension of a light scale, as on a graduated scale.

The electromechanical controls indicated herein by 8 are representative of both user-operated controls, for operating the lights, power window regulator, centralized door lock, seat and seatback regulator, windscreen wipers, etc., and main unit 2 control via block 7 of the actuators governing user-controlled operation of the vehicle members. For this reason, Fig.2 shows direct electrical connecting lines from control 8 to block 7 and vice versa. Housing 22 presents a front panel 35 supporting a number of buttons 36 representing user-operated controls 8. Obviously, the size of the dashpanel permitting, provision may be made for one housing having a front panel fitted with all the components supported, in the example shown, on panels 24 and 35.

As already stated, block 5 is connected to a number of sensors 6 for detecting all the data processed and required by unit 2 for controlling the other blocks in system 1. The data normally detected substantially relates to engine cooling fluid temperature; air temperature and pressure in the intake manifold for mixing and atomising the fuel; engine speed and phase, which, together with the air intake data, provides for controlling electronic injection and ignition; fuel level in the tank, which, together with other data, provides for calculating fuel consumption; vehicle speed, which, together with other data, provides for calculating average traveling speed; oil level and temperature, etc.. As already stated, certain parameters may be calculated by processing the data supplied to unit 2 by sensors 6. For example, the intake air temperature gives an approximate indication of the temperature outside the vehicle and, for example, the possibility of ice forming on the road surface, which may be shown by an alarm light or an additional all-purpose alarm indicator on block 4 for "dialoging" between system 1 and the user, e.g. for providing a fasten-seat-belt warning, or indicating speeding or an open door with the vehicle in motion. For diagnosing the electronic equipment, tap 16 need simply be connected to a known unit for indicating and/or displaying the data relative to the parts being controlled.

The advantages of the present invention invention will be clear from the foregoing description.

In particular, it provides for a vehicle control system incorporating all the current systems, including the instrumentation which, as described, is fully electronic.

Also, being electronic transducer types, the sensors employed provide for reducing manufacturing and assembly cost (by simplifying installation) and improving reliability (by eliminating mechanical wear). System 1 is electronically and, therefore, physically compact, thus enabling it to be installed directly on the dashpanel inside the passenger compartment; presents fewer component parts (e.g. fewer sensors) enabling low-cost manufacture; and features a single main data processing unit employed to maximum capacity. Moreover, the location of system 1 safeguards the components and electrical connections from thermal and mechanical stress and electromagnetic interference normally present in the engine compartment. As such, system 1 provides for a high degree of reliability and requires no particular maintenance. Control of all the electronic equipment on the vehicle, during both vehicle assembly and routine maintenance, is simplified by diagnostic tap 16 being located in an easily accessible position inside the passenger compartment.

To those skilled in the art, it will be clear that changes may be made to system 1 as described and illustrated herein without, however, departing from the scope of the present invention.

For example, as already stated, system 1 may be provided with additional control blocks (blocks 17) for performing additional functions, or provision may be made for direct access to the data bus of unit 2 by a trip computer.

## Claims

1. A vehicle control system incorporating all the electronic equipment on the vehicle, comprising:
a main electronic logic unit (2) connected to the vehicle battery via a first electronic electrical supply block (3);
a second electronic block (4) indicating operating data and parameters, i.e. the operating status of the engine and vehicle;
a third electronic interface block (5) to which are connected a number of sensors (6) for detecting data, parameters, operation and operating status relative to various vehicle members and components;
a fourth electronic interface block (7) to which are connected a number of electromechanical controls (8) representative of both user-operated controls and controls enabled by said unit (2) and governing said vehicle members and components;
a fifth electronic block (11) for controlling electronic injectors (12); and
a sixth electronic block (13) for controlling an electronic ignition power module (14);
said blocks (3, 4, 5, 7, 11, 13) being connected by electric connection line to said unit (2),
characterized in that said unit (2) and said blocks (3, 4, 5, 7, 11, 13) are installed on the vehicle dashpanel.

2. A system as claimed in Claim 1, characterised by the fact that it comprises at least one housing (21 and/or 22) having a front panel (24 or 35) supporting a number of electronic indicators (25, 26, 27, 28, 31, 32) of said second block (4).

3. A system as claimed in Claim 2, characterised by the fact that said panel (24) supports a number of indicator lights (34) for indicating alarm status, operation or operating status of parts of the vehicle, such as operation of the vehicle lights or direction indicators.

4. A system as claimed in Claim 2 and/or 3, characterised by th e fact that said panel (35) supports said user-operated electromechanical controls (8).

5. A system as claimed in at least one of the foregoing Claims from 2 to 4, characterised by the fact that it comprises a seventh electronic block (15) for transmitting and receiving data from said unit (2) and connected to a unit for diagnosing the electronics of said system; said seventh block (15) comprising a diagnostic tap (16) on said panel (24).

## Patentansprüche

1. Fahrzeugsteuersystem, welches die gesamte elektronische Ausstattung des Fahrzeugs einbezieht, mit:
einer elektronischen Logik-Haupteinheit (2), die über einen ersten elektronischen Stromversorgungsblock (3) mit der Fahrzeugbatterie verbunden ist;
einem zweiten Elektronikblock (4), der Betriebsdaten und Parameter angibt, z. B. den Betriebszustand des Motors und des Fahrzeugs;
einem dritten Schnittstellen-Elektronikblock (5), an den eine Anzahl von Sensoren (6) zum Erfassen von Daten, Parametern, Betriebs- und Arbeitszuständen von verschiedenen Fahrzeugelementen und Fahrzeugbauteilen angeschlossen ist;
einem vierten Schnittstellen-Elektronikblock (7), an den eine Anzahl von elektromechanischen Steuerungen (8) angeschlossen ist, die sowohl benutzerbetätigte Steuerungen als auch von der Einheit (2) betätigte Steuerungen umfassen und die Fahrzeugelemente und Fahrzeugbauteile steuern;
einem fünften Elektronikblock (11) zum Steuern elektronischer Einspritzdüsen (12); und
einem sechsten Elektronikblock (13) zum Steuern eines elektronischen Zünd-Leistungsmoduls (14);
wobei die Blocks (3, 4, 5, 7, 11, 13) über elektrische Verbindungsleitungen mit der Einheit (2) verbunden sind,
dadurch gekennzeichnet, daS die Einheit (2) und die Blöcke (3, 4, 5, 7, 11, 13) am Fahrzeugarmaturenbrett angebracht sind.

2. System nach Anspruch 1, dadurch gekennzeichnet, daß es wenigstens ein Gehäuse (21 und/oder 22) mit einer Frontplatte (24 oder 35) enthält, welche eine Anzahl von elektronischen Anzeigevorrichtungen (25, 26, 27, 28, 31, 32) des zweiten Blocks (4) trägt.

3. System nach Anspruch 2, dadurch gekennzeichnet, daß die Platte (24) eine Anzahl von Anzeigelampen (34) trägt, um einen Alarmzustand sowie den Betrieb oder Betriebszustand von Teilen des Fahrzeugs anzuzeigen, z. B. eine Betätigung der Fahrzeuglichter oder der Fahrtrichtungsanzeiger.

4. System nach Anspruch 2 und/oder 3, dadurch gekennzeichnet, daß die Platte (35) die benutzerbetätigten elektromechanischen Steuerungen (8) trägt.

5. System nach wenigstens einem der vorangegangenen Ansprüche 2 bis 4, dadurch gekennzeichnet, daß es zum Übertragen und Empfangen von Daten von der Einheit (2) einen siebten Elektronikblock (15) enthält, der mit einer Diagnoseeinheit für die elektronischen Bestandteile des Systems verbunden ist, wobei der siebte Block (15) auf der Platte (24) einen Diagnoseabgriff (16) enthält.

## Revendications

1. Un système de commande de véhicule incorporant tout l'équipement électronique du véhicule, comprenant :
une unité logique électronique principale (2) connectée à la batterie du véhicule par l'intermédiaire d'un premier bloc électronique d'alimentation électrique (3);
un second bloc électronique (4) indiquant des données fonctionnelles et des paramètres, c'est-à-dire l'état fonctionnel du moteur et du véhicule ;
un troisième bloc d'interface électronique (5) auquel sont connectés un certain nombre de capteurs (6) pour détecter des données, des paramètres, le fonctionnement et l'état fonctionnel concernant divers organes et composants du véhicule ;
un quatrième bloc d'interface électronique (7) auquel sont connectées un certain nombre de commandes électromécaniques (8) représentatives à la fois de commandes actionnées par l'utilisateur et de commandes activées par l'unité précitée (2) et régissant les organes et composants précités du véhicule ;
un cinquième bloc électronique (11) pour commander des injecteurs électroniques (12) ; et
un sixième bloc électronique (13) pour commander un module de puissance d'allumage électronique (14) ;
ces blocs (3, 4, 5, 7, 11, 13) étant connectés par des lignes de connexion électriques à l'unité précitée (2), caractérisé en ce que l'unité précitée (2) et les blocs (3, 4, 5, 7, 11, 13) sont installés sur le tableau de bord du véhicule.

2. Un système selon la revendication 1, caractérisé par le fait qu'il comprend au moins un boîtier (21 et/ou 22) ayant un panneau avant (24 ou 35) supportant un certain nombre d'indicateurs électroniques (25, 26, 27, 28, 31, 32) du second bloc (4).

3. Un système selon la revendication 2, caractérisé par le fait que le panneau (24) supporte un certain nombre de voyants lumineux (34) pour indiquer un état d'alarme, le fonctionnement ou l'état fonctionnel d'organes du véhicule, comme le fonctionnement des feux ou des indicateurs de direction du véhicule.

4. Un système selon la revendication 2 et/ou 3, caractérisé par le fait que le panneau (35) supporte les commandes électromagnétiques actionnées par l'utilisateur (8).

5. Un système selon l'une au moins des revendications 2 à 4 précédentes, caractérisé par le fait qu'il comprend un septième bloc électronique (15) qui est destiné à émettre des données vers l'unité (2) et à recevoir des données provenant de celle-ci, et qui est connecté à une unité pour le diagnostic des circuits électroniques du système ; ce septième bloc (15) comprenant une prise de diagnostic (16) sur le panneau précité (24).
